# EUROPÄISCHE PATENTSCHRIFT

(11) **EP 2 860 012 B1**
(45) Veröffentlichungstag und Bekanntmachung des Hinweises auf die Patenterteilung: **12.09.2018**
(21) Anmeldenummer: 14187942.9
(22) Anmeldetag: 07.10.2014
(51) Int. Cl.: B29C 45/73, B29C 33/76, B29C 45/40, B29C 33/04

(54) **TEMPERIERHÜLSE, VORZUGSWEISE FÜR KUNSTSTOFF-SPRITZGIESSWERKZEUGE**
TEMPERING SLEEVE, PREFERABLY FOR PLASTIC INJECTION MOULDING TOOLS
DOUILLE D'ÉQUILIBRAGE DE LA TEMPÉRATURE, DE PRÉFÉRENCE POUR DES OUTILS DE MOULAGE PAR INJECTION EN PLASTIQUE

(30) Priorität: 09.10.2013 DE 102013111171
(43) Veröffentlichungstag der Anmeldung: 15.04.2015
(73) Patentinhaber: Ziegler, Sven, 73095 Albershausen (DE)
(72) Erfinder: Ziegler, Sven, 73095 Albershausen (DE)
(74) Vertreter: Fürst, Siegfried

(56) Entgegenhaltungen:
- DE-U1-202013 101 680
- US-A- 4 238 106
- US-A1- 2013 256 952
- DATABASE WPI Week 200817 Thomson Scientific, London, GB; AN 2008-C25684 -& JP 2007 307840 A (YAMAHA MOTOR CO LTD) 29 November 2007 (2007-11-29)

## Beschreibung

Die Erfindung betrifft eine Temperierhülse zum Temperieren (Kühlen und/oder Heizen) von Stiften (Kernen) im Formenbau, insbesondere für Kunststoff-Spritzgießwerkzeuge, wobei die Temperierhülse ein zum Stift konzentrisches Element aufweist.

Im Formenbau - insbesondere im Formenbau für Kunststoff-Spritzgießwerkzeuge - gibt es eine Vielzahl von Stiften (Kernen), die mit der heißen Spritzmasse in Berührung kommen und deshalb besonders gekühlt werden müssen um nicht Schaden zu nehmen. Das Problem bei diesen Stiften ist nämlich, dass sie häufig zu klein sind, um in ihrem Inneren einen Kühlkanal zu haben, aber wegen ihrer kleinen Abmessungen von der heißen Gießmasse sehr schnell - bei Kunststoffspritzguss - auf bis zu 300 Grad aufgeheizt werden können. Naheliegenderweise ist dieses Problem noch extremer wenn die Temperaturen noch höher sind, wie z.B. beim Zinkdruckguss.

Zu diesen Stiften gehören unter anderem Formstifte, die in die heiße Gießmasse hineinragen, um beispielsweise das Kernloch für eine Schraube in einer spritztechnisch hergestellten Gehäuseschale frei zu halten. Aber auch Konturstempel, Düsen, Buchsen oder Auswerfer-Hülsen weisen das Problem der möglichen Überhitzung auf.

Um insbesondere schlanke Stifte (Kerne) zu kühlen ist bei einem Spritzgießwerkzeug nach der JP-A 2007 307 840 vorgesehen, dass nach dem Arbeitszyklus "Spritzgießen" während der Betätigung eines zum Ausstoßen des hergestellten Werkstückes vorgesehenen Ausstoßers der in einer Körperhälfte des Spritzgießwerkzeuges teilweise geführte Stift, dort Gussteilstift genannt, einschließlich seines aus dem hergestellten Werkstück zurückgezogenen kopfseitigen Körperabschnitts mit nur in diesem Moment zuführbarer Druckluft gekühlt wird.

Um nun die verschiedenen Bauformen der zu temperierenden, insbesondere zu kühlenden Stifte bereits während des Einspritzens der heißen Spritzmasse zu kühlen oder zu temperieren, werden diese Stifte in dem Bereich gekühlt, der nicht in das herzustellende Werkstück hinein taucht, wie bei einer Kühlvorrichtung nach der US 4,23 8,106 A. Bei dieser Vorrichtung ist der Kernstift der formgebenden Form selbst hülsenförmig. Im Ringmantel dieses Kernstiftes sind entweder axiale Bohrungen zur Führung von Kühlmittel angeordnet oder in den hohlen Kernstift wird eine Temperierhülse eingeführt, mit welcher Kühlmittel entlang der Innenwand des hohlen Kernstiftes geleitet wird. Mit anderen Worten: Der andere Teil der Stifte, der in den Körper von Platten oder Formteilen des Gießwerkzeuges hineinragt und dort auch gehalten wird, wird dort durch eine entsprechende Anordnung von Kühlkanälen gekühlt (oder temperiert). Durch den Wärmetransport innerhalb des Stiftes wird dann auch der Teil des Stiftes gekühlt, der in das Werkstück hineinragt.

Aus dem Stand der Technik ist die Schrift DE 203 07 126 U1 bekannt, wo eine Vorrichtung beschrieben wird, die mittels einer Hülse und einem in Kanälen geführten Fluidstrom Stifte eines Gießwerkzeuges kühlt. Es ist dort der Nachteil, dass der Wärmefluss über eine Dichtung erfolgen muss, die die Hülse und die Bohrung gegeneinander abdichtet. Da die Dichtung aus einem elastischen Material besteht, beispielsweise Gummi, ist der Wärmetransport dann entsprechend gering. Ferner ist dort nachteilig, dass die Übergangsfläche für den Wärmetransport relativ klein ist. Auch ist dort der Stift durch ein gewisses Spiel zu der Hülse beabstandet, so dass ebenfalls der Wärmetransport behindert wird.

Es ist deshalb die Aufgabe der Erfindung, eine Kühlmöglichkeit für Stifte des Formenbaus, insbesondere für Kunststoff-Spritzgießwerkzeuge, zu finden, die die genannten Nachteile zumindest reduziert.

Die Aufgabe wird von einer Temperierhülse mit den Merkmalen des Anspruches 1 oder von einer Temperierhülse mit den Merkmalen des Anspruches 2 oder von einer Temperierhülse mit den Merkmalen des Anspruches 3 gelöst. Mit der Erfindung wird der zu kühlende oder zu temperierende Stift von einer Temperierhülse neuer Art umgeben, an bzw. in deren Stützteil Führungselemente angeordnet sind, so dass das Kühlfluid einen direkten Kontakt zur Oberfläche des Stiftes herstellen kann, vorzugsweise einen großflächigen Kontakt. Ebenfalls wird, sofern es gewollt ist, zugleich auch ein Teil der Bohrungsoberfläche der Bohrung, welcher die Temperierhülse aufnimmt, gekühlt. Der Kontakt des Kühlfluides erfolgt also direkt mit dem Stift und nicht mittelbar über eine Hülse und zudem ist der Kontakt großflächiger.

Nach einer ersten Ausführungvariante der Erfindung ist die Oberfläche der Temperierhülse, also der Mantel ihres Stützteiles, ein- oder mehrfach durchbrochen, zudem besitzt das Stützteil zwei runde Dichtungsträger, welche mittels zwei säulenförmigen Abstandshaltern auf die gewünschte Baulänge gehalten sind.

Nach einer alternativen, zweiten Ausführungsvariante der Erfindung besitzt die Temperierhülse ein Stützteil gemäß den Merkmalen des Anspruches 2.

Nach einer alternativen, dritten Ausführungsvariante der Erfindung besitzt die Temperierhülse ein Stützteil gemäß den Merkmalen des Anspruches 3.

In einer weiteren Ausgestaltung der Erfindung ist die Temperierhülse an mindestens einem ihrer axialen Enden bzw. Endabschnitten mit einer Dichtung versehen.

In einer anderen Ausgestaltung der Erfindung ist jeweils die Dichtung als umlaufende Kappe ausgebildet.

In einer weiteren Ausgestaltung ist die Dichtung mit mehreren Dichtflächen und/oder Dichtkanten versehen.

In einer weiteren Ausgestaltung wird die Dichtung durch Umspritzen der axialen Enden bzw. Endabschnitte des Stützteiles gebildet.

In einer weiteren Ausgestaltung sind die axialen Enden bzw. Endabschnitte des Stützteils elastisch oder plastisch ausgebildet, wodurch sie als Dichtung dienen.

In einer weiteren Ausgestaltung sind die Stifte als Formstifte, Konturstempel, Düsen, Buchsen oder Auswerfer-Hülsen ausgebildet.

In einer weiteren Ausgestaltung ist das Stützteil aus einem verstärkten Material - vorzugsweise aus Metall, Keramik oder Kunststoff - gefertigt.

In einer anderen Ausgestaltung ist das Stützteil mehrteilig ausgebildet.

In einer weiteren Ausgestaltung weist die äußere und/oder innere Oberfläche der Temperierhülse - bzw. das Stützteil - wenigstens ein Führungselement für das Fluid auf, das vorzugsweise spiralförmig ausgebildet ist, z.B. eine Spiralnut, damit das Fluid - zumindest teilweise - in eine schraubenförmige Fließbewegung versetzt wird.

Weitere Details werden in Verbindung mit der Beschreibung von Figuren zu den Ausführungsbeispielen der Erfindung näher erläutert.

Zu den hier verwendeten Begriffen Kühlen und Temperieren sei noch anzumerken, dass generell zwar ein schnelles und starkes Herabkühlen der Stifte nach dem Kontakt mit der heißen Spritzmasse gewünscht ist, aber das gezielte Halten einer gewünschten Temperatur - also das Temperieren - kann im Rahmen der hier vorliegenden Erfindung beabsichtigt sein. Das Temperieren ist also ein Kühlen und ein anschließendes Halten bei einer bestimmten Temperatur; aber auch ein Anheben der Temperatur (Heizung) wird von dem Begriff "Temperieren" hier mit erfasst. Deshalb wird in der hier vorliegende Erfindung generell von einer Temperierhülse gesprochen.

Die Erfindung wird nachfolgend anhand von Ausführungsbeispielen näher erläutert. In den zugehörigen Zeichnungen zeigen schematisch:
- Figur 1: einen Ausschnitt aus einem Spritzwerkzeug mit einem Werkstück und einen Formstift, der von einer Temperierhülse umgeben ist;
- Figur 2: eine Temperierhülse in einer 3D-Ansicht;
- Figur 3: ein ringförmiges Stützteil für eine Temperierhülse;
- Figur 4a bis 4c: ein ringförmiges Stützteil mit äußeren Zuführrillen.

Zunächst soll vorausgeschickt werden, dass Begriffe wie "links", "rechts", "vorne" und "hinten" sich nur auf die Position in den Figuren der vorliegenden Anmeldung beziehen und in der Praxis davon abweichen können. Auch soll hervorgehoben werden, dass die Größenverhältnisse in der Praxis abweichen können.

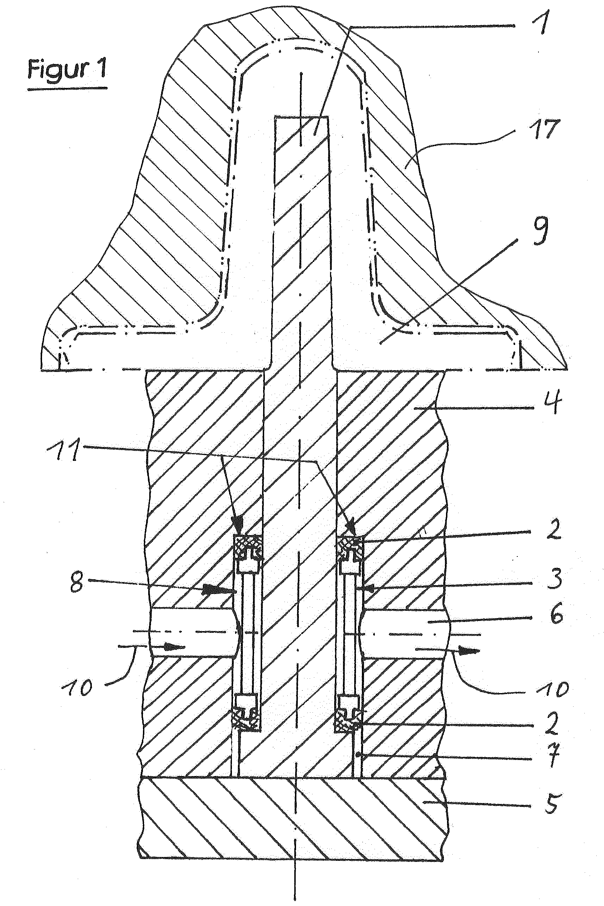

In der Figur 1 ist ein Ausschnitt eines Spritzgießwerkzeuges zu sehen. Ein nicht näher bezeichnetes und nur angedeutetes Werkstück 9 ist zwischen zwei Hälften 4, 17 eines Zweiplatten-Spritzgießwerkzeuges angeordnet. Die eine Hälfte des Spritzgießwerkzeuges ist mit der Nummer 4 bezeichnet worden, während die andere, obere Werkzeughälfte 17 hier nur schematisch angedeutet ist.

In den Hohlraum für das Werkstück 9 greift ein sogenannter Formstift 1 hinein, der nach dem Einschießen der flüssigen Werkstück-Masse ein Platzhalter für eine benötigte Sackbohrung sein soll. Die Werkstück-Masse kann sowohl aus Kunststoff, als auch aus einer metallenen Masse - wie beispielsweise eine Zink- oder Aluminium-Legierungen - bestehen.

Der Formstift 1 ist geometrisch derart klein, so dass er keine Kühlbohrungen aufnehmen kann. Aus diesem Grunde muss er von außen gekühlt werden. Der Formstift 1 ist in der Spritzform-Hälfte 4 in einer Bohrung 7 angeordnet. In radialer Richtung betrachtet befindet sich zwischen der Wandung der Bohrung 7 und dem Formstift 1 die erfinderische Temperierhülse 8. Der Formstift 1 weist an seinem unteren Ende einen Bund 1a auf. Die Bohrung 7 besitzt an ihrem oberen Ende einen Absatz 11, der als Flachsenkung oder - falls dieser Absatz durch Bohren hergestellt wird - als Kegelform ausgebildet sein kann. Zwischen dem Bund 1a und dem Absatz 11 erstreckt sich die Temperierhülse 8 auch axial. Dadurch ist sie sowohl radial, als auch axial fixiert. Ein axiales Verschieben des Formstiftes 1 wird beispielsweise durch eine Abdeckung 5 verhindert. Die Abdeckung 5 ist fest, aber lösbar mit der ersten Werkzeughälfte 4 verbunden.

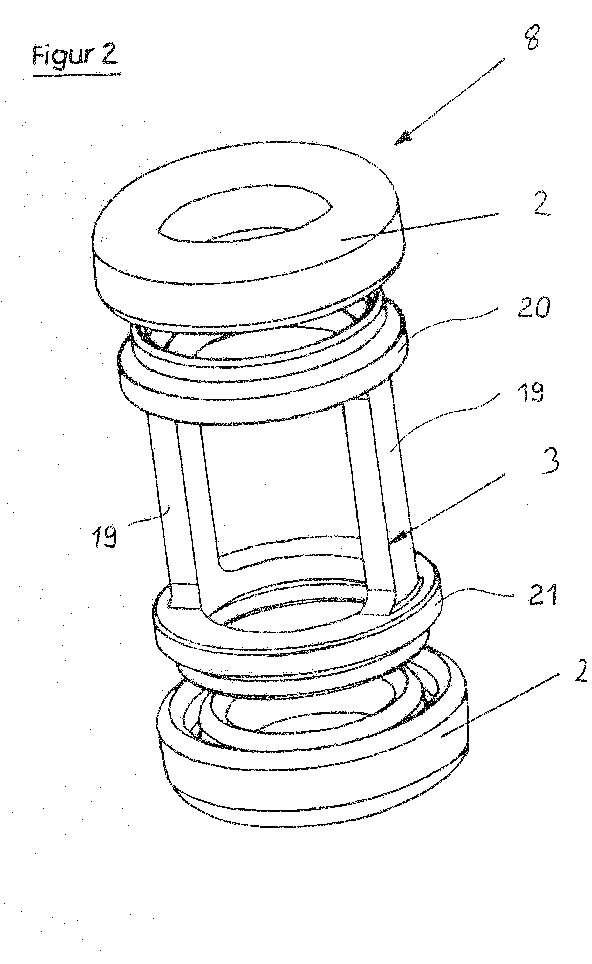

Damit der Formstift 1 gekühlt werden kann, ist ein Fluidstrom 10 erforderlich, der in dem Ausführungsbeispiel der Figur 1 im rechten Winkel quer zur Längserstreckung des Formstiftes 1 geführt wird. Aber auch andere Richtungen des Fluidstromes 10 sind denkbar. Wichtig ist im Rahmen der Erfindung nur, dass in unmittelbarer Nähe des Fluidstromes 10 zum Stift - hier ein Formstift 1 - die Strömung auf die Manteloberfläche des Formstiftes 1 trifft. Dieses wird nach der Erfindung möglich, indem die Temperierhülse 8 in ihrer Mantelfläche / ihrem Mantel Durchbrüche aufweist, die es dem Fluidstrom 10 möglich machen, direkt auf die Oberfläche des Formstiftes 1 zu strömen. Die Durchbrüche der Mantelfläche werden noch in Verbindung mit der Figur 2 näher erläutert.

Damit kein Fluid in die Spritzgießform hineingelangt oder auch nach außen tritt oder anderweitig verloren geht, besteht die Temperierhülse 8 aus einem Stützteil 3 mit mindestens einer axial angeordneten Dichtung 2. Vorteilhafter ist es, wenn das Stützteil 3 sogar zwei Dichtungen- also an jedem axialen Ende eine - aufweist. Dadurch wird jegliche Leckage des Kühlfluides unterbunden. Der Transport des Fluides 10 erfolgt über Querbohrungen 6.

Die Dichtungen 2 der Temperierhülse 8 können vielfältig realisiert werden. In einer ersten Lösung sind die Dichtungen 2 als umlaufende Kappe ausgebildet, die axial auf die Enden 20, 21 des Stützteiles 3 gesteckt werden. Umlaufend heißt in diesem Fall, dass die Kappe nicht unbedingt rund - also kreisförmig - ausgebildet sein muss, sondern je nach Querschnittsform des Formstiftes 1 oder der Bohrung 7, auch eckig gestaltet sein kann. In einer anderen Ausgestaltung weist die Dichtung 2 mehrere Dichtfunktionen auf. So sind zum Beispiel eine radial äußere Dichtlippe und/oder eine radial innere Dichtlippe oder auch Dichtflächen denkbar. Auch kann die Dichtung 2 als O-Ring ausgestaltet sein.

In einer weiteren Ausgestaltung der Dichtung 2 kann das Stützteil 3 - zumindest an den axialen Enden - mit einer weichen, haftenden Masse umspritzt sein. Aber auch die Ausgestaltung einer Dichtung 2 durch Schaffung plastischer und/oder elastisch verformbarer Enden des Stützteiles 3 liegt im Rahmen der Erfindung.

Zum Kühlfluid soll angemerkt werden, dass nicht nur Wasser, sondern auch - je nach Anwendungsfall - andere Flüssigkeiten und sogar Gase Anwendung finden können kann.

Bisher ist bezüglich der Figur 1 nur immer von Formstiften 1 die Rede gewesen. Im Rahmen der Erfindung ist die Temperierhülse 8 auch für Konturstempel, Düsen, Buchsen und Auswerfer-Hülsen anwendbar.

In der Figur 2 ist die Temperierhülse 8 durch ihre perspektivische Darstellung besser visuell erfassbar. Die beiden Dichtungen 2 sind hier kreisrund und kappenförmig ausgebildet. Die Dichtungen 2 sind mit einem Abstand zum Stützteil 3 zu sehen, weil es sich hier zusätzlich um eine Explosionszeichnung handelt.

Die Temperierhülse 8 besteht hier aus den zwei Dichtungen 2 und dem Stützteil 3. Das Stützteil 3 besteht im Wesentlichen aus zwei runden Dichtungsträgern 20, 21 für die jeweilige Dichtung 2 und Abstandshaltern 19, hier vorzugsweise zwei Säulen. Durch die Säulen oder Abstandshalter 19 werden die Dichtungen auf gewünschte Baulänge gehalten. Wenn man sich nun das Kühlfluid vor vorne kommend vorstellt (senkrecht zur Papierebene), so kann man erkennen, dass das Fluid direkt auf die Mantelfläche des Stiftes 1 trifft. Durch den Abstand der Säulen zur Bohrung (siehe in Figur 1) kann das Fluid auch die Wandung der Bohrung 7 anspülen. Dadurch wird auf alle Fälle der Stift 1 gekühlt oder temperiert, als auch das Werkzeug. In einer besonderen Ausgestaltung des Stützteiles 3, welche in den Figuren 1 und 2 nicht gezeigt ist, kann eine rotatorische Fließbewegung des Kühlfluides provoziert werden, wodurch eine optimalere Anordnung der Fluidkanäle gestaltet werden kann.

Im Rahmen der Erfindung ist auch daran gedacht, das Stützteil 3 mehrteilig zu gestalten, weil dann mehr Gestaltungsspielraum in der Konstruktion vorhanden ist. So sind dann beispielsweise Hinterschneidungen kein Fertigungsproblem mehr. In einer anderen Ausgestaltung des Stützteiles 3 wird dieses aus einem verstärkten Material - wie Metall, Keramik oder auch Kunststoff - gefertigt.

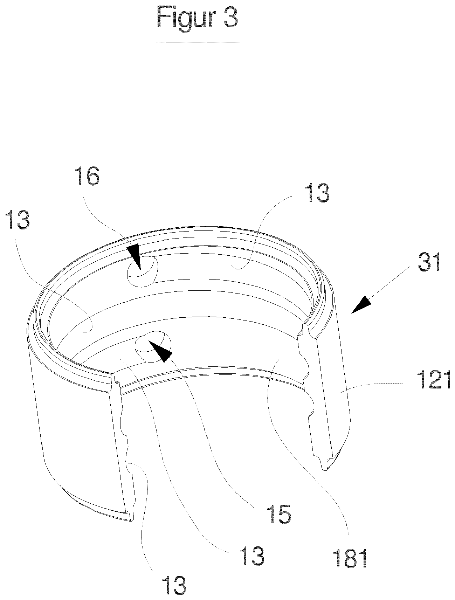

Im Gegensatz zu den Figuren 1 und 2, wo das Stützteil 3 im Wesentlichen aus zwei Säulen 19 und den ringförmigen Dichtungsträgern 20, 21 besteht, ist ein Stützteil zweiter Ausführung in der Figur 3 als Ring 31 ausgebildet (die obere und die untere Dichtung 2 sind hier nicht gezeichnet worden; der Ring ist teilweise aufgeschnitten gezeichnet, um die Lage einer Spiralnut 13 in der Innenfläche 181 anschaulicher zu zeigen). Ein Fluid kann hier statt über eine Querbohrung 6 - wie bereits in der Figur 1 gezeigt ist - über eine der Bohrungen 15, 16 in das Innere des Ringes 31 gelangen, so dass es von der Oberfläche des Stiftes 1 Wärme - vorzugsweise abführen - kann. Nach dem Durchfließen des Fluids entlang der Spiralnut 13 und der entsprechenden Wärmeübergabe vom Stift 1 zum Fluid (oder umgekehrt) kann dann das Fluid über die andere Bohrung 15, 16 und über eine weitere, höhenversetzte Querbohrung 6 abfließen. Die äußere Mantelfläche 121 dieses ringförmigen Stützteiles 31 ist hier im Wesentlichen glatt.

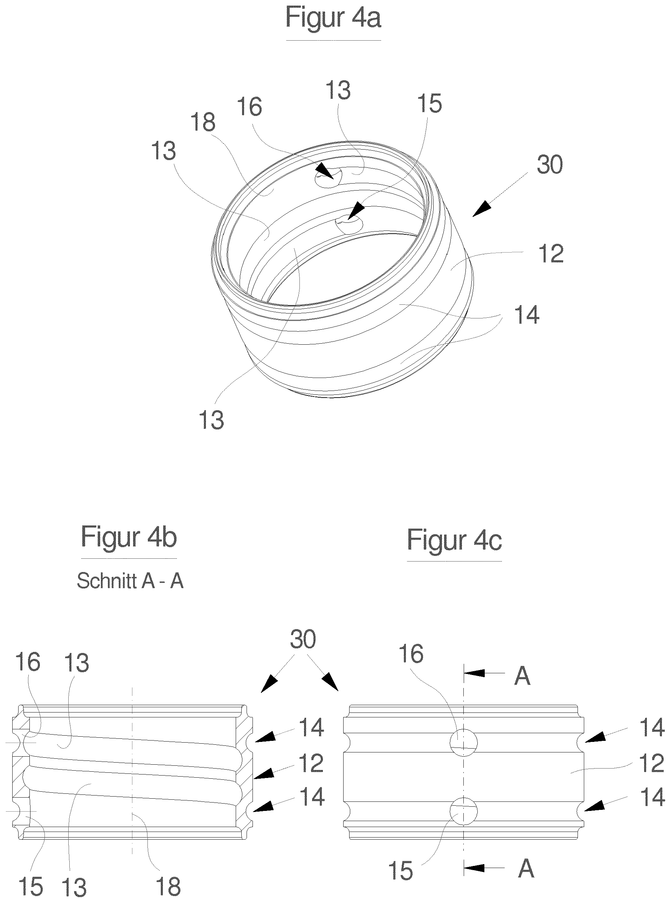

In den Figuren 4a bis 4c ist ein Stützteil dritter Ausführung gezeigt, es ist ebenfalls als Ring ausgebildet und hat das Bezugszeichen 30. Dieses Stützteil 30 besitzt ebenso wie das Stützteil 31 nach zweiter Ausführung übereinander angeordnete Durchgangsbohrungen 15, 16, welche über eine Spiralnut 13, die in der Innenfläche 18 vorhanden ist in Wirkverbindung stehen. Zudem sind bei diesem Stützteil 30 dritter Ausführung in der äußeren Mantelfläche 12 Rillen 14 vorgesehen; hier zwei Rillen, wobei dies keine Einschränkung ist.

Die Figur 4b entspricht hierbei dem Schnitt A-A aus der Figur 4c. Diese Rillen 14 haben den Vorteil, dass die Bohrungen 15, 16 und die entsprechenden Querbohrungen 6 nicht fluchtend eingebaut werden müssen. Befindet sich also nicht eine Bohrung 15, 16 vor einer Querbohrung 6, so kann das Fluid zunächst erst einmal in einer der Rillen 14 um das Stützteil 3 herum entlang fließen, bis es eine der Bohrungen 15, 16 erreicht hat und dann in das Innere dieses Stützteiles 30 gelangen kann. Für den Rücktransport des Fluids kommt dann die andere Rille 14 zur Anwendung.

Im Rahmen der Erfindung ist aber auch daran gedacht, dass die Säulen - bzw. Abstandhalter bei dem in den Figuren 1 und 2 gezeigten Ausführungsbeispiel - drallfördernd (für das Fluid) ausgestaltet sind. In einer anderen, weiteren Ausführungsvariante bestehen die Dichtungen und das Stützteil aus ein und demselben Material. Ist dieses Material ein elastisches Material, so wird dieses Stützteil in einem Abschnitt zwischen seinen Endabschnitten durch strukturelle Formung oder Fremdmaterialeinlagen versteift. Ist das Material einer solchen Temperierhülse an sich steif, so werden die axialen Endabschnitte dieser Temperierhülse durch zum Beispiel labyrinthförmige Gestaltung elastisch verformbar ausgebildet.

### Bezugszeichenliste

- 1: Stift
- 2: Dichtringe
- 3, 30, 31: Stützteil
- 4: erste Spritzform-Hälfte (Spritzgusswerkzeug)
- 5: Abdeckung
- 6: Querbohrung
- 7: Bohrung (mit kegeligem oder stumpfen Absatz)
- 8: Temperierhülse
- 9: Werkstück
- 10: Fluid
- 11: Bohrungsabsatz zu Position 7
- 12, 121: (Ring) Mantelfläche (außen)
- 13: Spiralnut (innen)
- 14: Rillen (außen)
- 15: Bohrung (Durchgangsbohrung)
- 16: Bohrung (Durchgangsbohrung)
- 17: zweite Spritzform-Hälfte (Spritzgusswerkzeug)
- 18, 181: Innenfläche
- 19: Säulen (von Pos. 3)
- 20: oberer Dichtungsträger (von Pos. 3)
- 21: unterer Dichtungsträger (von Pos. 3)

## Patentansprüche

1. Temperierhülse (8) zum Kühlen oder Temperieren von Stiften (1) im Formenbau, insbesondere für Kunststoffspritzgusswerkzeuge, wobei die Temperierhülse (8) ein zum Stift (1) konzentrisches Stützteil (3) aufweist,
**dadurch gekennzeichnet, dass**
die Temperierhülse (8) außen um den Stift (1) herum angeordnet ist und dass das Stützteil (3) eine durchbrochene Oberfläche aufweist, um einem quer zur Längserstreckung des Stiftes (1) strömenden Fluid zumindest den Kontakt zum Stift (1) zu ermöglichen, sowie zwei runde Dichtungsträger (20,21), welche mittels zwei säulenförmigen Abstandshaltern (19) auf die gewünschte Baulänge gehalten sind.

2. Temperierhülse (8) zum Kühlen oder Temperieren von Stiften (1) im Formenbau, insbesondere für Kunststoffspritzgusswerkzeuge, wobei die Temperierhülse (8) ein zum Stift (1) konzentrisches Stützteil (3) aufweist,
**dadurch gekennzeichnet, dass**
die Temperierhülse (8) außen um den Stift (1) herum angeordnet ist und dass das Stützteil (3) ein Ring (31) ist, welcher in seiner Innenfläche (181) eine Spiralnut (13) aufweist sowie zwei übereinander angeordnete Durchgangsbohrungen (15,16), welche von außen (121) in das Innere des Ringes (31) gelangen.

3. Temperierhülse (8) zum Kühlen oder Temperieren von Stiften (1) im Formenbau, insbesondere für Kunststoffspritzgusswerkzeuge, wobei die Temperierhülse (8) ein zum Stift (1) konzentrisches Stützteil (3) aufweist,
**dadurch gekennzeichnet, dass**
die Temperierhülse (8) außen um den Stift (1) herum angeordnet ist und dass das Stützteil (3) ein Ring (30) ist, welcher übereinander angeordnete Durchgangsbohrungen (15,16) hat sowie eine Spiralnut (13) in seiner Innenfläche (18), wobei die Durchgangsbohrungen (15,16) über die Spiralnut (13) in Wirkverbindung stehen, und Rillen (14) in seiner äußeren Mantelfläche (12).

4. Temperierhülse (8) nach Anspruch 1, 2 oder 3,
**dadurch gekennzeichnet, dass**
sie an mindestens einem ihrer axialen Enden mit einer Dichtung (2) versehen ist.

5. Temperierhülse (8) nach Anspruch 4,
**dadurch gekennzeichnet, dass**
die Dichtung (2) als umlaufende Kappe ausgebildet ist.

6. Temperierhülse nach Anspruch 4,
**dadurch gekennzeichnet, dass**
die Dichtung (2) mehrere Dichtflächen und/oder Dichtkanten aufweist.

7. Temperierhülse nach Anspruch 4,
**dadurch gekennzeichnet, dass**
die Dichtung (2) durch Umspritzen - zumindest der axialen Enden - des Stützteiles (3) gebildet wird.

8. Temperierhülse (8) nach Anspruch 1, 2 oder 3,
**dadurch gekennzeichnet, dass**
das axiale Ende des Stützteils (3) elastisch oder plastisch ausgebildet ist.

9. Temperierhülse (8) nach mindestens einem der Ansprüche 1 bis 8,
**dadurch gekennzeichnet, dass**
das Stützteil (3) aus einem verstärkten Material - vorzugsweise aus Metall, Keramik oder Kunststoff - gefertigt ist.

10. Temperierhülse (8) nach mindestens einem der Ansprüche 1 bis 9,
**dadurch gekennzeichnet, dass**
das Stützteil (3) mehrteilig ausgebildet ist.

11. Temperierhülse (8) nach Anspruch 2 oder 3,
**dadurch gekennzeichnet, dass**
die äußeren Oberfläche (12) der Temperierhülse (30) eine Führung für das Fluid aufweist, die spiralförmig ausgebildet ist, damit das Fluid - zumindest teilweise - in eine schraubenförmige Fließbewegung versetzt wird.

## Claims

1. Temperature-influencing sleeve (8) for the cooling or temperature-influencing of pins (1) in mould construction, particularly for plastics material injection-moulding tools, wherein the temperature-influencing sleeve (8) comprises a support member (3) concentric with respect to the pin (1), **characterised in that** the temperature-influencing sleeve (8) is arranged externally around the pin (1) and that the support member (3) has an interrupted surface, so as to enable a fluid which flows transversely to the length direction of the pin (1) to have at least contact with the pin (1), and two round seal carriers (20, 21) which are kept at the desired installation length by means of two column-shaped spacers (19).

2. Temperature-influencing sleeve (8) for the cooling or temperature-influencing of pins (1) in mould construction, particularly for plastics material injection-moulding tools, wherein the temperature-influencing sleeve (8) comprises a support member (3) concentric with respect to the pin (1), **characterised in that** the temperature-influencing sleeve (8) is arranged externally around the pin (1) and that the support member (3) is a ring (31), which has in its inner surface (181) a helical groove (13) as well as two passage bores (15, 16) which are arranged one above the other and run from the outside (121) to the inside of the ring (31).

3. Temperature-influencing sleeve (8) for the cooling or temperature-influencing of pins (1) in mould construction, particularly for plastics material injection-moulding tools, wherein the temperature-influencing sleeve (8) comprises a support member (3) concentric with respect to the pin (1), **characterised in that** the temperature-influencing sleeve (8) is arranged externally around the pin (1) and that the support member (3) is a ring (31), which has two passage bores (15, 16) arranged one above the other and a helical groove (13) in its inner surface (181), the passage bores (15, 16) being in operative connection by way of the helical groove (13), and flutes (14) in its outer circumferential surface (12).

4. Temperature-influencing sleeve (8) according to claim 1, 2 or 3, **characterised in that** it is provided with a seal (2) at at least one of its axial ends.

5. Temperature-influencing sleeve (8) according to claim 4, **characterised in that** the seal is formed as an encircling cap.

6. Temperature-influencing sleeve (8) according to claim 4, **characterised in that** the seal (2) has a plurality of sealing surfaces and/or sealing edges.

7. Temperature-influencing sleeve (8) according to claim 4, **characterised in that** the seal (2) is formed by injection-moulding around - at least the axial ends - of the support member (3).

8. Temperature-influencing sleeve (8) according to claim 1, 2 or 3, **characterised in that** the axial end of the support member (3) is constructed to be elastic or plastic.

9. Temperature-influencing sleeve (8) according to at least one of claims 1 to 8, **characterised in that** the support member (3) is made of a reinforced material, preferably of metal, ceramics or plastics material.

10. Temperature-influencing sleeve (8) according to at least one of claims 1 to 9, **characterised in that** the support member (3) is of multi-part construction.

11. Temperature-influencing sleeve (8) according to claim 2 or 3, **characterised in that** the outer surface (12) of the temperature-influencing sleeve (30) has for the fluid a guide which is of helical form so that the fluid is set - at least partly - into a helical flow motion.

## Revendications

1. Manchon de régulation de température (8) pour refroidir ou mettre à température des broches (1) dans la construction de moules, en particulier pour des outils de moulage par injection de matière plastique, lequel manchon de régulation de température (8) présente une partie support (3) concentrique à la broche (1),
**caractérisé en ce**
**que** le manchon de régulation de température (8) est disposé à l'extérieur autour de la broche (1) et que la partie support (3) présente une surface ajourée pour permettre à un fluide s'écoulant transversalement à l'extension longitudinale de la broche (1) d'être au moins en contact avec la broche (1), ainsi que deux porte-joints ronds (20, 21) qui sont maintenus à la longueur souhaitée au moyen de deux entretoises en forme de colonne (19).

2. Manchon de régulation de température (8) pour refroidir ou mettre à température des broches (1) dans la construction de moules, en particulier pour des outils de moulage par injection de matière plastique, lequel manchon de régulation de température (8) présente une partie support (3) concentrique à la broche (1),
**caractérisé en ce**
**que** le manchon de régulation de température (8) est disposé à l'extérieur autour de la broche (1) et que la partie support (3) est une bague (31) qui présente dans sa surface intérieure (181) une rainure en spirale (13) ainsi que deux trous traversants (15, 16) disposés l'un au-dessus de l'autre, qui débouchent à l'intérieur de la bague (31) depuis l'extérieur (121).

3. Manchon de régulation de température (8) pour refroidir ou mettre à température des broches (1) dans la construction de moules, en particulier pour des outils de moulage par injection de matière plastique, lequel manchon de régulation de température (8) présente une partie support (3) concentrique à la broche (1),
**caractérisé en ce**
**que** le manchon de régulation de température (8) est disposé à l'extérieur autour de la broche (1) et que la partie support (3) est une bague (30) qui présente des trous traversants (15, 16) disposés l'un au-dessus de l'autre ainsi qu'une rainure en spirale (13) dans sa surface intérieure (18), les trous traversants (15, 16) étant en liaison fonctionnelle par l'intermédiaire de la rainure en spirale (13), et des cannelures (14) dans sa surface extérieure (12).

4. Manchon de régulation de température (8) selon la revendication 1, 2 ou 3,
**caractérisé en ce**
**qu'**il est pourvu d'un joint (2) à au moins une de ses extrémités axiales.

5. Manchon de régulation de température (8) selon la revendication 4,
**caractérisé en ce**
**que** le joint (2) est réalisé sous la forme d'un capuchon périphérique.

6. Manchon de régulation de température selon la revendication 4,
**caractérisé en ce**
**que** le joint (2) présente plusieurs faces d'étanchéité et/ou bords d'étanchéité.

7. Manchon de régulation de température selon la revendication 4,
**caractérisé en ce**
**que** le joint (2) est formé par surmoulage, au moins des extrémités axiales, de la partie support (3).

8. Manchon de régulation de température (8) selon la revendication 1, 2 ou 3,
**caractérisé en ce**
**que** l'extrémité axiale de la partie support (3) est conçue élastique ou plastique.

9. Manchon de régulation de température (8) selon au moins l'une des revendications 1 à 8,
**caractérisé en ce**
**que** la partie support (3) est fabriquée dans un matériau renforcé, de préférence en métal, en céramique ou en matière plastique.

10. Manchon de régulation de température (8) selon au moins l'une des revendications 1 à 9,
**caractérisé en ce**
**que** la partie support (3) est réalisée en plusieurs parties.

11. Manchon de régulation de température (8) selon la revendication 2 ou 3,
**caractérisé en ce**
**que** la surface extérieure (12) du manchon de régulation de température (30) présente un guide pour le fluide qui est réalisé en spirale, de sorte que le fluide est entraîné, au moins partiellement, dans un mouvement d'écoulement hélicoïdal.
